# EUROPEAN PATENT SPECIFICATION

(11) **EP 0 524 708 B1**
(45) Date of publication and mention of the grant of the patent: **02.01.1997**
(21) Application number: 92203094.5
(22) Date of filing: 08.10.1992
(51) Int. Cl.: H02H 5/00, A45D 20/30, H03K 17/955

(54) **Personal-care apparatus comprising a capacitive on/off switch**
Mit einem kapazitiven Ein/Aus-Schalter ausgerüstetes Gerät zur Körperpflege
Appareil de soins corporels muni d'un interrupteur capacitif

(30) Priority: 17.10.1991 EP 91202696
(43) Date of publication of application: 27.01.1993
(73) Proprietor: Philips Electronics N.V., 5621 BA Eindhoven (NL)
(72) Inventor: Yap, Kok Kin, NL-5656 AA Eindhoven (NL); Ler, Boon Chong, NL-5656 AA Eindhoven (NL); Lim, Swee Guan, NL-5656 AA Eindhoven (NL)
(74) Representative: Schoonheijm, Harry Barend

(56) References cited:
- EP-A- 0 052 685
- EP-A- 0 127 237
- CH-A- 584 981
- GB-A- 2 054 151

## Description

The invention relates to a portable personal-care apparatus comprising a load and a switch, which load and which switch are coupled in series between a first and a second supply terminal for receiving an alternating voltage.

Such a portable personal-care apparatus can be, for example, a hair drier, the load comprising a heater and a fan, and the switch being arranged to turn on/off the alternating voltage across the load.

Such a portable personal-care apparatus is generally known, the load often comprising a motor and the alternating voltage being usually the mains voltage.

When, in a first example, such a personal-care apparatus is constructed as a toothbrush, the apparatus is sometimes briefly put aside with the alternating voltage applied across the load. However, in such a short time the apparatus in the form of a toothbrush may fall as a result of vibrations caused by a motor comprised by the load, which may give rise to both electrical and mechanical defects of the apparatus in the form of a toothbrush.

When, in a second example, such a personal-care apparatus is constructed as a hair drier, the apparatus is often briefly put aside with the alternating voltage applied across the load. However, in such a short time the apparatus in the form of a hair drier may cause a fire as a result of heat developed by a heater comprised by the load, for example when the apparatus is placed on an inflammable surface. Moreover, the apparatus in the form of a hair drier may fall as a result of vibrations caused by a fan comprised by the load, as a result of which the apparatus in the form of a hair drier, similarly to the apparatus in the form of a toothbrush, may become defective and the apparatus in the form of a hair drier may cause a fire as a result of heat developed by a heater comprised by the load, for example in the case of an inflammable carpet.

GB-A-2 054 151 discloses a hot-air hand dryer, a device which is fixed to a wall and cannot be picked up as is the case with hand-held personal care apparatus. This known hot-air hand dryer has a capacitive aerial, made of a metal foil and disposed close to the outlet of the hot air, for detecting the proximity of a human user.

EP-A-0 127 237 discloses a portable personal-care apparatus, in that case a shaver. The shaver disclosed includes a resistive contact switch to detect when it is held by a hand of the user and further includes a capacitive proximity sensor to detect when it is in a given distance from the user's face. The shaver operates only when the contact switch is made by the user's hand and the proximity switch is activated.

It is an object of the invention to provide a portable personal-care apparatus which precludes the above-mentioned undesirable situations.

In accordance with the invention there is provided a portable personal-care apparatus adapted to be held by a user, comprising a load and a switch, which load and which switch are coupled in series between a first and a second supply terminal for receiving an alternating voltage, a rectifying circuit for converting the alternating voltage into a direct voltage and for supplying the direct voltage between a third and a fourth terminal, and a safety circuit coupled between the third and fourth supply terminals, the safety circuit comprising a capacitive sensor for detecting the presence of a human hand and being adapted to control the switch so as to enable switching on of the apparatus when the apparatus is picked up by a user and so as to switch off the apparatus when the user puts the apparatus down.

Whereas the rectifying circuit is needed for the power supply of the safety circuit, a first advantage of the portable personal-care apparatus in accordance with the invention is obtained in that the safety circuit ensures that the apparatus is switched on/off depending on the active use of the apparatus, which active use is detected by means of a capacitive sensor for detecting the presence of a human hand in the proximity of the apparatus. Thus, when a personal-care apparatus in accordance with the invention is briefly put aside the capacitive sensor will detect the absence of a human hand in the proximity of the apparatus, in response to which the safety circuit turns off the alternating voltage across the load. A second advantage of the personal-care apparatus in accordance with the invention is that the power consumption of the apparatus is reduced because the alternating voltage across the load is turned off.

A personal-care apparatus in accordance with the invention may comprise a handle, with the capacitive sensor arranged near the handle. Because the capacitive sensor is adapted to detect the presence of a human hand near the personal-care apparatus, it is advantageous to arrange the capacitive sensor near the handle by which the apparatus is held in the hand during active use of the apparatus.

The safety circuit may comprise a first oscillator comprising a capacitor, which is constituted by the capacitive sensor, and an output, a frequency-to-signal converter having an input coupled to the output of the first oscillator and having an output, and a first switching element having a control current path coupled to the output of the frequency-to-signal converter and having a main current path coupled to the switch. In this case, the proximity of a part of the human body causes a change in capacitance of the capacitor formed by the capacitive sensor, which change is converted into a frequency variation of an electric signal generated by the first oscillator, which frequency variation can be used advantageously for controlling the switch. For controlling the switch the present embodiment comprises the frequency-to-signal converter, by means of which frequency-to-signal converter the frequency variation of the electric signal is converted into a control signal for the first switching element, in response to which control signal the switching element turns the switch on/off.

The safety circuit may comprise an indicator element for generating a warning signal, which indicator element is serially coupled to the main current path of the first switching element. The indicator element has the advantage of providing a visual or audible indication of the on/off switch setting.

The safety circuit may comprise a second oscillator comprising a capacitor and an output, and a second switching element having a control current path coupled to the output of the second oscillator and having a main current path coupled in parallel with the main current path of the first switching element. On the basis of the capacitor the second oscillator generates a signal by means of which the second switching element is continually switched on/off. Thus, when the first switching element is switched off the second switching element will turn on/off the indicator element, which is coupled in series with the main current paths of the switching elements, on the basis of which turn-on/off a user of the personal-care apparatus can discern that the apparatus is in a standby state. Conversely, when the first switching element is on this first switching element will turn on the indicator element, on the basis of which turn-on a user of the personal-care apparatus can discern that the apparatus is in an active state.

A personal-care apparatus in accordance with the invention may comprise a switch which has a control current path serially coupled to the main current path of the first switching element and having a main current path by which the switch is serially coupled to the load. This technique provides a very simple way of controlling the switch, which switch, provided with the control current path and the main current path, may be constructed, for example, by means of a relay.

An interrupt switch may be provided for switching the load on or off even in the case that the switch is in the on-state or should be on on the basis of detection of the presence of a human hand. An advantage of the interrupt switch is that the personal-care apparatus can be switched off when the apparatus should be in the on-state on the basis of the detection of a human hand. For example, if the personal-care apparatus in accordance with the invention is a hair drier, the interrupt switch enables a hand-held apparatus to be switched off briefly, for example for briefly combing the hair. The interrupt switch can be constructed simply by means of a push-to-interrupt switch coupled in series with the main current path of the first switching element or with the main current path of the switch.

The above and other (more detailed) features of the invention will be described more elaborately with reference to the accompanying drawings, in which
Figure 1 shows a relevant part of a first embodiment of a personal-care apparatus in accordance with the invention, and
Figure 2 shows a relevant part of a second embodiment of a personal-care apparatus in accordance with the invention.

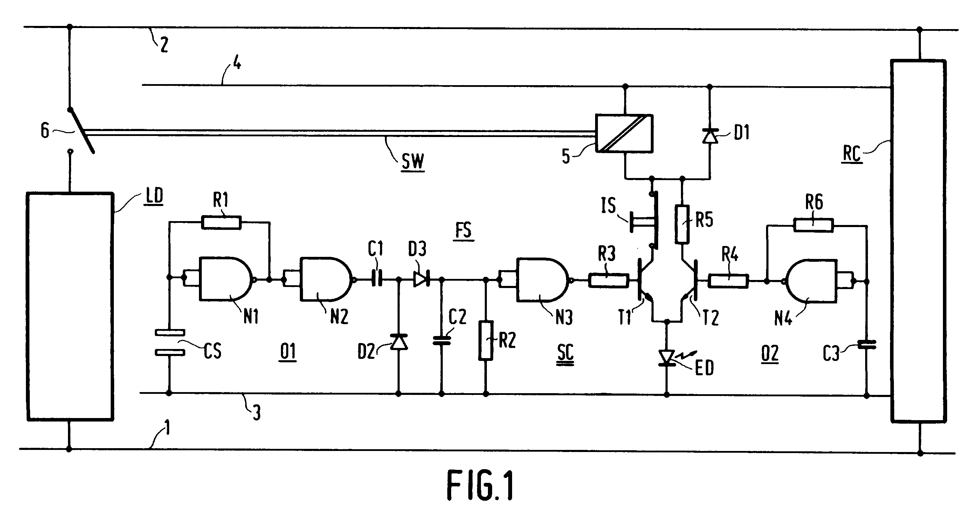

Fig. 1 shows a relevant part of a first embodiment of a personal-care apparatus in accordance with the invention. The relevant part comprises a load LD and a switch SW serially coupled between a first supply terminal 1 and a second supply terminal 2 for the application of an alternating voltage, a rectifying circuit RC for converting the alternating voltage into a direct voltage, and a safety circuit SC coupled between a third supply terminal 3 and a fourth supply terminal 4 for the application of the direct voltage. Since the load LD and the rectifying circuit RC can be constructed in numerous known manners, which manners are not relevant to the present invention, Fig. 1 does not show any details of the load LD and the rectifying circuit RC.

The load LD can be constructed, for example, by means of a heater and a fan if the apparatus is, for example, a hair drier, or by means of a motor if the apparatus is, for example, an electric toothbrush.

The rectifying circuit RC can be constructed, for example, by means of a diode bridge circuit coupled to the supply terminals 1 and 2 for receiving the alternating voltage and to the supply terminals 3 and 4 for supplying the direct voltage, having a capacitor coupled between the supply terminals 3 and 4 to smooth the direct voltage, and having a zener diode coupled between the supply terminals 3 and 4 to stabilise the direct voltage, which diode bridge circuit can be coupled, for example, to the supply terminals 1 and 2 by means of a first and a second power resistor in order to reduce the alternating voltage applied to the diode bridge circuit.

In the present embodiment the switch SW is constructed by means of a relay having a control current path 5 coupled to the safety circuit SC and a main current path 6, which main current path 6 couples the switch SW in series with the load LD. To protect the relay against an induction current produced after turning off of the switch SW formed by the relay a diode D1 is coupled in parallel with the control current path 5 of the relay.

The safety circuit SC in the present embodiment comprises an oscillator O1, a frequency-to-signal converter FS, a first switching element (T1, N3, R3), a second oscillator O2, a second switching element (T2, R4, R5), an interrupt switch IS, and an indicator element (ED), the oscillator O1, in accordance with the invention, comprising a capacitive sensor CS for the detection of a part of a human body in the proximity of the personal-care apparatus, the safety circuit SC being adapted to control the switch SW in response to this detection. Since a personal-care apparatus is generally held by means of a handle it is advantageous to arrange the capacitive sensor CS near the handle, the capacitive sensor CS being constructed, for example, by means of a first capacitor plate, arranged in or on the handle of the apparatus, and a second capacitor plate, coupled to the supply terminal 3. Although the second capacitor plate, similarly to the first capacitor plate, can be arranged in or on the handle, the physical presence of the second capacitor plate is not necessary in the case of a mains-powered apparatus. As a matter of fact, if the capacitive sensor CS only comprises the first capacitor plate, the first capacitor plate constitutes a capacitance to earth *via* a part of the human body near the apparatus, which capacitance to earth is coupled to the supply terminal 3 *via* the mains voltage and the rectifying circuit RC. Whereas the capacitive sensor CS comprising the first capacitor plate has the advantage that the relevant sensor can be constructed simply and cheaply, the capacitive sensor CS, regardless of its construction, in comparison with for example an optical or a resistive sensor, has the advantage that detection by the capacitive sensor CS is not affected by, for example, soiling of the capacitive sensor CS.

In addition to the capacitive sensor CS the oscillator O1 comprises a NAND-gate N1, a NAND-gate N2, and a resistor R1, the NAND-gate N1 having interconnected inputs coupled to the supply terminal 3 by means of the capacitive sensor CS and having an output coupled to said inputs by means of the resistor R1, the NAND-gate N2 having interconnected inputs coupled to the output of the NAND-gate N1 and having an output. The frequency-to-signal converter FS comprises a capacitor C1, a diode D2, a diode D3, a capacitor C2, and a resistor R2, the capacitor C1 and the diode D2 being serially coupled between the output of the NAND-gate N2 and the supply terminal 3, the capacitor C2 and the diode D3 being serially coupled between the supply terminal 3 and a point situated between the capacitor C1 and the diode D2, the resistor R2 being coupled in parallel with the capacitor C2. The first switching element (T1, N3, R3) comprises a transistor T1 with a base, with a collector and with an emitter, a NAND-gate N3, and a resistor R3, the NAND-gate N3 having interconnected inputs coupled to a point situated between the diode D3 and the capacitor C2 and having an output coupled to the base of the transistor T1 by means of the resistor R3. The second oscillator O2 comprises a NAND-gate N4, a capacitor C3 and a resistor R6, the NAND-gate N4 having interconnected inputs coupled to the supply terminal 3 by means of the capacitor C3 and having an output coupled to said inputs by means of the resistor R6. The second switching element (T2, R4, R5) comprises a transistor T2 with a base, with a collector and with an emitter, a resistor R4 coupled between the output of the NAND-gate N4 and the base of the transistor T2, and a resistor R5 coupled between the collector of the transistor T2 and the collector of the transistor T1, the collector of the transistor T1 being coupled to the supply terminal 4 by means of the parallel arrangement of the control current path 5 of the relay and the diode D1, the emitter of the transistor T2 being coupled to the emitter of the transistor T1. In the present embodiment the interrupt switch IS, which is capable of switching on/off the load LD when the switch SW should be on on the basis of detection of the presence of a human hand, is coupled between the collector of the transistor T1 and the parallel arrangement of the control current path 5 of the relay and the diode D1. In the present embodiment the indicator element (ED) is constructed by means of a light-emitting diode ED coupled between the emitters of the transistors T1 and T2 and the supply terminal 3.

The oscillators O1 and O2 play a central role in the operation of the present embodiment. When the supply terminals 1 and 2 are connected to an alternating voltage, for example the mains voltage, a direct voltage generated by the rectifying circuit RC is applied to the safety circuit SC coupled to the supply terminals 3 and 4.

In a standby state of the personal-care apparatus, in which state the switch SW formed by the relay is in the off-position, the oscillators O1 and O2, which are energized with the direct voltage, will oscillate. The oscillator O1 generates an electric signal whose frequency is related to a capacitance of the capacitive sensor CS, the capacitive sensor CS being charged and discharged continually *via* the resistor R1 across the NAND-gate N1. By means of the NAND-gate N2, which constitutes a buffer, the electric signal is applied to the frequency-to-signal converter FS, which converter converts the electric signal into a control signal. In the standby state the control signal has such a value that the transistor T1 is not conductive. The capacitor C1 consequently transfers the electric signal generated by the oscillator O1, after which the diodes D2 and D3 rectify the signal and subsequently the capacitor C2 delivers a smoothed control signal. In the same way as the oscillator O1 the oscillator O2 generates an electric signal whose frequency is related to a capacitance of the capacitor C3, the capacitor being charged and discharged continually *via* the resistor R6 across the NAND-gate N4. The electric signal generated by the oscillator O2 is applied to the base of the transistor T2 and causes the transistor T2 to be turned on and turned off continually. In the standby state, in which the transistor T1 is cut off, turning on and off of the transistor T2 results in a current which causes the light-emitting diode ED to blink, the switch SW formed by the relay not being turned on by the current, which is limited by the resistor R5. Limiting the current is not necessary, for example, if the collector of the transistor T2 is coupled directly to the supply terminal 4.

In the active state of the personal-care apparatus, in which state the apparatus is for example held in a hand, the capacitance of the capacitive sensor CS has a value which differs from that in the standby state, as a result of which the oscillator O1 generates an electric signal of lower frequency which differs from that in the standby state. As in the standby state the electric signal is applied to the frequency-to-signal converter FS, which converter converts the electric signal into the control signal. In the active state the control signal has such a value that the transistor T1 conducts. As a result of this, the capacitor C1 blocks the electric signal generated by the oscillator O1, the resistor R2 ensuring that the capacitor C2 is discharged rapidly. As the transistor T1 is conductive a current flows through this transistor, which current causes the light-emitting diode ED to light up, the current switching on the switch SW formed by the relay and applying an alternating voltage across the load LD. In the active state the current can be interrupted by means of the interrupt switch IS, the switch SW formed by the relay being switched off. Thus, the interrupt switch IS has the advantage that the user of an apparatus provided with the safety circuit SC can briefly switch off the apparatus during the active state. Since in the active state, as in the standby state, the oscillator O2 turns the transistor T2 on/off, the light-emitting diode ED the light-emitting diode ED will light up intermittently instead of continuously when the interrupt switch IS is activated. Although in the present embodiment the interrupt switch IS is coupled between the collector of the transistor T1 and the control current path 5 of the relay, the interrupt switch IS may be arranged at several other locations, for example in series with the main current path 6 of the relay.

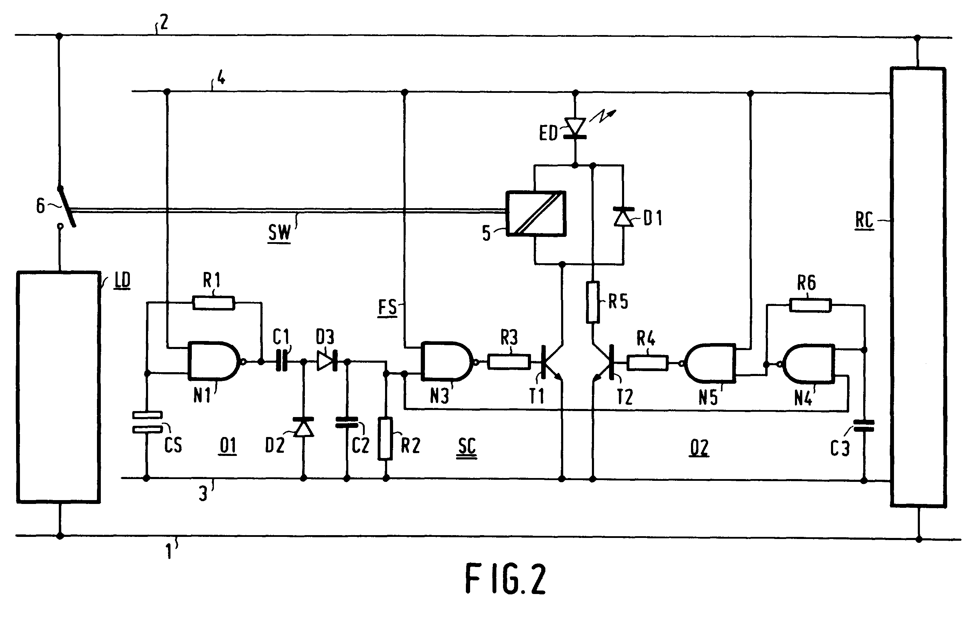

Fig. 2 shows a relevant part of a second embodiment of a personal-care apparatus in accordance with the invention. The relevant part differs from that of the embodiment shown in Fig. 1 in several features, illustrating the large number of possible constructions of the safety circuit SC. A first feature is that the NAND-gate N2 is dispensed with and a NAND-gate N5 is included. The NAND-gate N5 has a first input coupled to the output of the NAND-gate N4, a second input coupled to the supply terminal 4, and an output coupled to the base of the transistor T2 by a resistor R4. The NAND-gate N5 has a buffer function similarly to the NAND-gates N2 and N3 shown in Fig. 1. The NAND-gates can be constructed advantageously by means of a single integrated circuit. A second feature relates to the NAND-gates N1 and N3, which like the NAND-gate N5 have an input coupled to the supply terminal 4. As the NAND-gates shown in Figs. 1 and 2 are each arranged as an inverter, the inputs which are not essential for the operation may be coupled to one another or to the supply terminal 4. A third feature is that the indicator element formed by the light-emitting diode ED has been transferred to another location. In the present embodiment the light-emitting diode ED is coupled between the supply terminal 4 and the parallel arrangement of the control current path 5 of the relay and of the diode D1. A fourth feature concerns the NAND-gate N4 and the resistor R5, which NAND-gate has an input coupled to the point situated between the diode D3 and the capacitor C2, said resistor R5 being coupled directly to the light-emitting diode ED. Since the input of the NAND-gate N4 is coupled to the relevant point the oscillator O2 is switched off when the transistor T1 is turned on. A fifth feature is that the interrupt switch is dispensed with, although this interrupt switch can be arranged at several locations in the relevant part of the personal-care apparatus.

The invention is not limited to the embodiments shown herein. Within the scope of the invention several modifications are conceivable to those skilled in the art. Thus, the switch, the oscillators, the frequency-to-signal converter, the switching elements and the indicator element can be constructed in many ways which differ from the embodiments shown. For example, the switch can be constructed by means of a triac having a control current path coupled to the switching elements and having a main current path coupled in series with the load. Moreover, the control current path of the switch can be coupled to the main current paths of the switching elements at another point, for example between the main current paths of the switching elements and the third supply terminal. The indicator element may be constructed, for example, by means of a lamp or a sound reproducer and may readily be arranged at another location in the safety circuit SC, for example between the main current paths of the switching elements and the control current path of the switch. Another possibility is to implement the indicator element by means of two light-emitting diodes, for example light-emitting diodes of different colour, which light-emitting diodes may be coupled for example serially to the respective main current paths of the switching elements. A further possibility is to implement the indicator element by means of a light-emitting diode and a sound reproducer, which may be useful for example for deaf and blind people.

## Claims

1. A portable personal-care apparatus adapted to be held by a user, comprising a load (LD) and switch (SW), which load (LD) and which switch (SW) are coupled in series between a first (1) and a second (2) supply terminal for receiving an alternating voltage, characterised in that the personal-care apparatus further comprises a rectifying circuit (RC) for converting the alternating voltage into a direct voltage and for supplying the direct voltage between a third (3) and a fourth (4) supply terminal, and a safety circuit (SC) coupled between the third (3) and fourth (4) supply terminals for receiving the direct voltage, the safety circuit (SC) comprising a capacitive sensor (CS) for detecting the presence of a human hand and being adapted to control the switch (SW) so as to enable switching on of the apparatus when the apparatus is picked up by a user and so as to switch off the apparatus when the user puts the apparatus down.

2. A portable personal-care apparatus as claimed in Claim 1, wherein the apparatus comprises a handle, and the capacitive sensor (CS) is arranged near the handle.

3. A portable personal-care apparatus as claimed in Claim 1 or 2, wherein the safety circuit (SC) further comprises a first oscillator (O1) comprising a capacitor (CS), which is constituted by the capacitive sensor, and an output, a frequency-to-signal converter (FS) having an input coupled to the output of the first oscillator (O1) and having an output, and a first switching element (T1) having a control current path coupled to the output of the frequency-to-signal converter (FS) and having a main current path coupled to the switch (SW).

4. A portable personal-care apparatus as claimed in Claim 3, wherein the safety circuit (SC) further comprises an indicator element (ED) for generating a warning signal, which indicator element (ED) is serially coupled to the main current path of the first switching element (T1).

5. A portable personal-care apparatus as claimed in Claim 4, wherein the safety circuit (SC) further comprises a second oscillator (O2) comprising a capacitor (C3) and an output, and a second switching element (T2) having a control current path coupled to the output of the second oscillator (O2) and having a main current path serially coupled to the indicator element (ED).

6. A portable personal-care apparatus as claimed in Claim 3, 4 or 5, wherein the switch (SW) has a control current path (5) serially coupled to the main current path of the first switching element (T1) and has a main current path (6) by which the switch is serially coupled to the load (LD).

7. A portable personal-care apparatus as claimed in Claim 3, 4, 5 or 6, further comprising an interrupt switch (IS) in series with the main current path of the first switching element (T1) for switching on/off the load (LD) in the case that the first switching element (T1) is in the on-state.

## Patentansprüche

1. Tragbares Gerät zur Körperpflege, das eingerichtet ist, um von einem Benutzer gehalten zu werden, mit einer Last (LD) und einem Schalter (SW), wobei die Last (LD) und der Schalter (SW) zwischen einem ersten (1) und einem zweiten (2) Speiseanschluß zum Empfangen einer Wechselspannung in Reihe geschaltet sind, dadurch gekennzeichnet, daß das Gerät zur Körperpflege weiterhin eine Gleichrichterschaltung (RC) zum Umsetzen der Wechselspannung in eine Gleichspannung und zum Liefern der Gleichspannung zwischen einem dritten (3) und einem vierten (4) Speiseanschluß umfaßt und eine Sicherheitsschaltung (SC), die zum Empfangen der Gleichspannung zwischen den dritten (3) und den vierten (4) Speiseanschluß geschaltet ist, wobei die Sicherheitsschaltung (SC) einen kapazitiven Sensor (CS) zur Detektion des Vorhandenseins einer menschlichen Hand umfaßt und eingerichtet ist, den Schalter (SW) zu steuern, um Einschalten des Geräts zu ermöglichen, wenn das Gerät von einem Benutzer ergriffen wird, und um das Gerät abzuschalten, wenn der Benutzer das Gerät niederlegt.

2. Tragbares Gerät zur Körperpflege nach Anspruch 1, wobei das Gerät einen Handgriff umfaßt und der kapazitive Sensor (CS) nahe dem Handgriff angeordnet ist.

3. Tragbares Gerät zur Körperpflege nach Anspruch 1 oder 2, wobei die Sicherheitsschaltung (SC) weiterhin einen ersten Oszillator (O1) mit einem von dem kapazitiven Sensor gebildeten Kondensator (CS) umfaßt und einen Ausgang, einen Frequenz-Signal-Umsetzer (FS), der einen mit dem Ausgang des ersten Oszillators (O1) gekoppelten Eingang und einen Ausgang hat, und ein erstes Schaltelement (T1), das einen mit dem Ausgang des Frequenz-Signal-Umsetzers (FS) gekoppelten Steuerstrompfad und einen mit dem Schalter (SW) gekoppelten Hauptstrompfad hat.

4. Tragbares Gerät zur Körperpflege nach Anspruch 3, wobei die Sicherheitsschaltung (SC) weiterhin ein Anzeigeelement (ED) zum Generieren eines Warnsignals umfaßt, wobei das Anzeigeelement (ED) mit dem Hauptstrompfad des ersten Schaltelements in Reihe geschaltet ist.

5. Tragbares Gerät zur Körperpflege nach Anspruch 4, wobei die Sicherheitsschaltung weiterhin einen zweiten Oszillator (O2) mit einem Kondensator (C3) und einen Ausgang umfaßt und ein zweites Schaltelement (T2), das einen mit dem Ausgang des zweiten Oszillators (O2) gekoppelten Steuerstrompfad und einen mit dem Anzeigeelement (ED) in Reihe geschalteten Hauptstrompfad hat.

6. Tragbares Gerät zur Körperpflege nach Anspruch 3, 4 oder 5, wobei der Schalter (SW) einen mit dem Hauptstrompfad des ersten Schaltelements (T1) in Reihe geschalteten Steuerstrompfad (5) hat und einen Hauptstrompfad (6), durch den der Schalter mit der Last (LD) in Reihe geschaltet ist.

7. Tragbares Gerät zur Körperpflege nach Anspruch 3, 4, 5 oder 6, mit weiterhin einem Unterbrechungsschalter (IS) in Reihe mit dem Hauptstrompfad des ersten Schaltelements (T1) zum Ein-/Ausschalten der Last (LD) in dem Fall, daß das erste Schaltelement (T1) sich im eingeschalteten Zustand befindet.

## Revendications

1. Appareil de soins corporels portatif adapté à être tenu par un utilisateur et comportant une charge (LD) et un commutateur (SW), ladite charge (LD) et ledit commutateur (SW) sont couplés en série entre des première (1) et deuxième bornes d'alimentation (2) pour recevoir une tension alternative, caractérisé en ce que l'appareil de soins corporels comporte encore un circuit redresseur (RC) pour convertir la tension alternative en une tension continue et pour alimenter la tension continue entre des troisième (3) et quatrième bornes d'alimentation (4), et un circuit de sécurité (SC) couplé entre les troisième (3) et quatrième bornes d'alimentation (4) pour recevoir la tension continue, le circuit de sécurité (SC) comportant un détecteur capacitif (CS) pour détecter la présence d'une main humaine et étant adapté à commander le commutateur (SW) de manière à permettre la mise en service de l'appareil lorsque l'appareil est pris par un utilisateur et de manière à mettre l'appareil hors service lorsque l'utilisateur dépose l'appareil.

2. Appareil de soins corporels portatif selon la revendication 1 suivant laquelle l'appareil comporte une poignée et le détecteur capacitif (CS) est disposé près de la poignée.

3. Appareil de soins corporels portatif selon la revendication 1 ou 2 suivant laquelle le circuit de sécurité (SC) comporte encore un premier oscillateur (O1) comportant un condensateur (CS) qui est constitué par le détecteur capacitif, et une sortie, un convertisseur fréquence/signal (FS) ayant une entrée couplée à la sortie du premier oscillateur (O1) et présentant une sortie, et un premier élément commutateur (T1) ayant un trajet de courant de commande couplé à la sortie du convertisseur fréquence/signal (FS) et ayant un trajet de courant principal couplé au commutateur (SW).

4. Appareil de soins corporels portatif selon la revendication 3 suivant laquelle le circuit de sécurité (SC) comporte encore un élément indicateur (ED) pour engendrer un signal d'avertissement, ledit élément (ED) est couplé en série au trajet de courant principal du premier élément commutateur (T1).

5. Appareil de soins corporels portatif selon la revendication 4 suivant laquelle le circuit de sécurité (SC) comporte encore un deuxième oscillateur (O2) comportant un condensateur (C3) et une sortie, et un deuxième élément commutateur (T2) ayant un trajet de courant de commande couplé à la sortie du deuxième oscillateur (O2) et ayant un trajet de courant principal couplé en série à l'élément indicateur (ED).

6. Appareil de soins corporels portatif selon la revendication 3, 4 ou 5 suivant laquelle le commutateur (SW) a un trajet de courant de commande (5) couplé en série au trajet de courant principal du premier élément commutateur (T1) et présente un trajet de courant principal (6) par lequel le commutateur est couplé en série à la charge (LD).

7. Appareil de soins corporels portatif selon la revendication 3, 4, 5 ou 6, comportant encore un interrupteur (IS) couplé en série au trajet de courant principal du premier élément commutateur (T1) pour enclencher/déclencher la charge (LD) dans le cas où le premier élément commutateur (T1) est à l'état de marche.
